# FASCICULE DE BREVET EUROPEEN

(11) **EP 1 980 782 B1**
(45) Date de publication et mention de la délivrance du brevet: **15.01.2014**
(21) Numéro de dépôt: 08356059.9
(22) Date de dépôt: 09.04.2008
(51) Int. Cl.: F16L 37/084, F16L 37/23, F16L 37/42

(54) **Elément femelle de raccord et raccord rapide comprenant un tel élément femelle**
Anschlussbuchse und eine Schnellverbindung mit einer solchen Buchse
Female connection element and a quick connector including such a female element

(30) Priorité: 10.04.2007 FR 0702594
(43) Date de publication de la demande: 15.10.2008
(73) Titulaire: STAUBLI FAVERGES, 74210 FAVERGES (FR)
(72) Inventeur: Tiberghien, Alain-Christophe, 74320 Sevrier (FR); Pastore, Olivier, 74210 Faverges (FR)
(74) Mandataire: Myon, Gérard Jean-Pierre

(56) Documents cités:
- EP-A- 0 122 404
- EP-A- 0 707 171
- US-A- 2 473 973
- US-A- 5 230 538

## Description

La présente invention concerne un élément femelle pour un raccord destiné à réaliser la jonction amovible de deux conduites de fluide. L'invention concerne également un raccord rapide comprenant un tel élément femelle.

Un raccord rapide comporte classiquement un about mâle et un élément femelle complémentaire, que l'on raccorde en les emboîtant l'un dans l'autre. L'élément femelle est généralement raccordé à une conduite amont et il est pourvu d'une soupape d'obturation que l'about mâle manoeuvre vers une position ouverte lorsqu'on l'emboîte dans cet élément femelle. L'about mâle est généralement raccordé à une conduite aval. Après cet emboîtement, les conduites amont et aval sont jointes et le fluide peut s'écouler de l'une à l'autre.

Pour maintenir en position axiale l'about mâle emboîté dans l'élément femelle, il est connu d'employer un mécanisme à billes de verrouillage, tel que celui illustré par la figure 6 de FR-A-2 882 803. Les billes de verrouillage coopèrent avec une gorge de verrouillage ménagée sur l'about de façon à immobiliser ce dernier. Chaque bille de verrouillage est ainsi mobile radialement entre une position déverrouillée où elle peut occuper un siège associé à l'élément femelle et une position verrouillée où elle est apte à bloquer l'about axialement.

Il est connu par ailleurs de prévoir sur l'élément femelle un élément annulaire de verrouillage pouvant former une bague pour maintenir radialement en place chaque bille de verrouillage dans la position verrouillée où les billes bloquent l'about. Comme l'élément annulaire ou la bague de verrouillage est généralement mobile en translation axiale par rapport aux billes sous l'effet d'un élément élastique, certains raccords de l'art antérieur incorporent une bague de sécurité mobile axialement et destinée à maintenir radialement les billes de verrouillage dans la position déverrouillée, tant que l'about n'est pas emboîté dans l'élément femelle.

Dans la position déverrouillée, les billes de verrouillage constituent un obstacle au déplacement axial de la bague de verrouillage. Lorsque l'about est emmanché dans l'élément femelle, il repousse axialement la bague de sécurité vers la conduite amont, ce qui libère les billes de verrouillage qui se déplacent radialement de façon centripète dans la gorge de verrouillage pour immobiliser l'about. Les billes de verrouillage libèrent ainsi la bague de verrouillage qui se déplace axialement et vient recouvrir les billes, afin d'empêcher leur retour en position déverrouillée.

Cependant, un élément femelle d'un raccord ainsi construit présente un encombrement axial important. En effet, cet encombrement cumule la longueur de la bague de sécurité, de sa course axiale et la longueur de l'about qui est emboîté dans le corps de l'élément femelle.

En outre, un tel raccord présente une fiabilité réduite, car il n'est pas nécessaire d'appuyer uniformément sur toute la section, généralement annulaire, de la bague de sécurité pour la déplacer axialement. En particulier, lorsque l'extrémité de l'about à emboîter possède une grande longueur, on peut repousser axialement la bague de sécurité en introduisant l'about de manière inclinée, donc sans appuyer sur toute la section de la bague. Dans ce cas, les billes de verrouillage peuvent être amenées en position verrouillée et libérer ainsi la bague de verrouillage, sans pour autant engager l'about. L'about peut alors être retiré tandis que la bague de verrouillage se trouve en position verrouillée. Dans cette position, il n'est plus possible de connecter automatiquement l'about sans avoir préalablement et manuellement ramené la bague de verrouillage dans la position déverrouillée.

Par ailleurs, l'ajout d'une bague de sécurité axiale entre la bille de verrouillage et le canal d'emboîtement de l'about n'est pas compatible avec un élément femelle dans lequel la bague de verrouillage reste fixe, tandis que se déplace en son sein un adaptateur intermédiaire devant être verrouillé par les billes avec l'about. En effet, l'incorporation d'une bague de sécurité dans un tel élément femelle augmenterait sensiblement son encombrement radial ou fragiliserait la pièce intermédiaire pour un encombrement radial donné. De plus, les ressorts agissant sur la bague de sécurité et sur l'adaptateur pour les ramener en position déverrouillée exerceraient des efforts dirigés dans le même sens, ce qui nécessiterait une construction très précise pour obtenir des déplacements axiaux successifs et non simultanés de ces composants.

Par ailleurs, US-A-5 230 538 ou EP-A-0 707 171 décrit un élément femelle de raccord avec un canal axial pour about mâle, un élément annulaire de verrouillage et des billes de verrouillage qui sont mobiles axialement par rapport l'élément annulaire et radialement entre des positions verrouillée et déverrouillée.

L'élément femelle de US-A-5 230 238 ou de EP-A-0 707 171 comporte un ruban élastique annulaire formant obstacle au déplacement axial de la bague de verrouillage. Une telle géométrie représente un encombrement, radial et axial important pour un tel obstacle. Cela fragilise l'élément femelle à dimensions constantes. En outre, la géométrie des dispositifs-obstacles de US-A-5 230 238 et de EP-A-0 707 171 est relativement complexe, ce qui rend leur fabrication coûteuse.

US-A-2473973 décrit un raccord rapide selon la préambule de la revendication 1. Il comporte des billes de verrouillage et un dispositif formant obstacle au déplacement radial des billes de verrouillage, présentant une dimension axiale relativement importante. L'élément femelle comporte ur corps interne et un manchon annulaire externe mobile axialement par rapport au corps interne. Un élément élastique repousse axialement le manchon annulaire par rapport au corps interne de l'élément femelle, vers sa position verrouillée. Cet élément élastique exerce, sur le dispositif formant obstacle, une force de rappel relativement grande, ce qui compromet la stabilité du raccord en position déverrouillée.

L'invention vise plus particulièrement à remédier à ces inconvénients en proposant un élément femelle de raccord comprenant un dispositif apte à détecter une géométrie et une position correctes de l'about dans le canal d'emboîtement.

A cet effet, l'invention a pour objet un élément femelle de raccord présentant un canal s'étendant axialement et destiné à recevoir un about mâle, l'élément femelle comportant un élément annulaire de verrouillage de l'about formé par un premier corps solidaire de l'élément femelle et au moins une bille de verrouillage de l'about mobile axialement par rapport à l'élément annulaire et radialement entre une position déverrouillée où elle est susceptible d'occuper un siège d'appui ménagé dans l'élément annulaire, et une position verrouillée où elle est guidée radialement dans un corps de l'élément femelle et où elle est apte à bloquer axialement l'about dans le corps, l'élément femelle comportant en outre :
- au moins un dispositif formant obstacle au déplacement axial de l'élément annulaire par rapport à la bille de verrouillage en position déverrouillée, ledit dispositif étant escamotable radialement, et
- au moins un élément élastique de rappel dudit dispositif en position déverrouillée et
- au moins un organe de détection de l'about agencé radialement entre le canal et ledit dispositif, l'organe de détection étant apte, en position déverrouillée, à être écarté radialement par l'about de façon à escamoter le dispositif,
ledit dispositif et l'élément élastique étant constitués d'un jonc d'arrêt en forme d'anneau élastique,
ledit second corps étant monté coulissant axialement dans le premier corps, le second corps définissant le canal et présentant des cavités aptes à recevoir la bille de verrouillage et l'organe de détection.

Selon l'invention, le jonc d'arrêt est composé d'un fil à section globalement circulaire de forme sensiblement torique. L'élément femelle comporte en outre un mécanisme d'arrêt apte à immobiliser axialement le second corps par rapport au premier corps. L'élément femelle comprend un organe élastique de rappel du second corps en position déverrouillée.

Grâce à l'invention, on réalise un accouplement compact et sécurisé de l'about dans l'élément femelle, ce qui évite les verrouillages défaillants et les fuites éventuellement induites.

Selon d'autres caractéristiques avantageuses mais non obligatoires de l'invention prises isolément ou selon toute combinaison techniquement possible :
- l'élément femelle de raccord comprend plusieurs organes de détection répartis à la périphérie du canal et aptes à être écartés radialement par l'about de façon à escamoter ensemble le dispositif ;
- la bille de verrouillage se trouve entre l'organe de détection et une embouchure du canal destinée à recevoir un about mâle ;
- le dispositif est escamotable selon la direction centrifuge dans au moins un logement ménagé dans le premier corps ;
- les organes de détection sont mobiles radialement vers l'extérieur par rapport à l'élément femelle de façon à escamoter le dispositif :
- l'organe de détection est une bille ;
- le jonc d'arrêt est reçu dans une gorge annulaire de l'élément femelle en position déverrouillée, la dimension axiale de la gorge annulaire étant supérieure au diamètre du fil du jonc d'arrêt et la profondeur de la gorge annulaire étant inférieure au diamètre du fil du jonc d'arrêt, tandis qu'en position verrouillée, le jonc d'arrêt est escamoté hors de la gorge annulaire ;
- la profondeur de la gorge annulaire est supérieure à la moitié du diamètre du fil du jonc d'arrét ;
- l'élément femelle présente au moins une cavité destinée à recevoir un organe de détection et la gorge annulaire est décalée axialement vers l'embouchure du canal par rapport au centre de la ou chaque cavité ;

D'autre part, l'invention a pour objet un raccord rapide pour la jonction de deux conduites comprenant un élément femelle et un about, caractérisé en ce que l'élément femelle est tel qu'exposé ci-dessus et l'about présente une gorge de verrouillage apte à recevoir la ou chaque bille de verrouillage, ainsi qu'une partie externe apte à écarter radialement l'organe de détection de façon à escamoter le dispositif formant obstacle.

L'invention sera bien comprise et d'autres avantages de celle-ci apparaîtront plus clairement à la lumière de la description qui va suivre, donnée uniquement à titre d'exemple e: faite en référence aux dessins annexés dans lesquels :
- la figure 1 est une coupe d'un raccord conforme à un premier mode de réalisation, comprenant un élément femelle dans lequel se trouve un about en position intermédiaire, les composants mobiles de l'élément femelle étant chacun en position déverrouillée ;
- la figure 2 est une coupe analogue à la figure 1 où l'about et les composants mobiles de l'élément femelle se trouvent en position verrouillée ;
- la figure 3 est une coupe d'un raccord conforme à un deuxième mode de réalisation de l'invention, comprenant un élément femelle conforme à un deuxième mode de realisation de l'invention et un about en position désaccouplée, les composants mobiles de l'élément femelle étant chacun en position déverrouillée ;
- la figure 3A est une vue à plus grande échelle du détail A à la figure 3 ;
- la figure 3B est une vue à plus grande échelle du détail B à la figure 3 ;
- la figure 4 est une coupe selon la ligne IV-IV de l'élément femelle à la figure 3 ;
- la figure 5 est une vue analogue à la figure 3 ou l'about est en cours d'accouplement dans l'élément femelle ;
- la figure 6 est une coupe selon la ligne VI-VI à la figure 5 ;
- la figure 7 est une coupe analogue aux figures 3 et 5 montrant le raccord accouplé avec ses composants en position verrouillée.

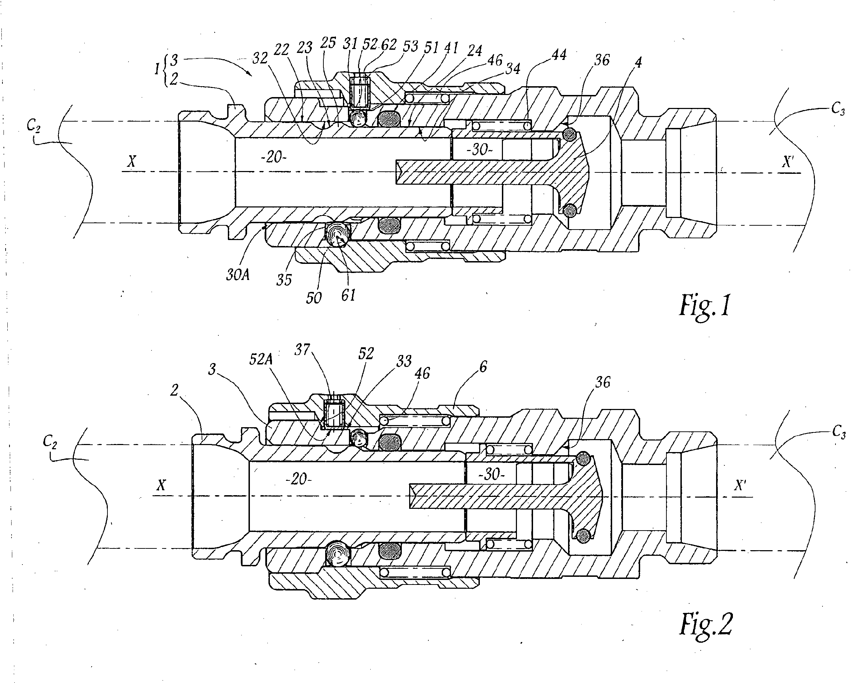

La figure 1 montre un raccord 1 comprenant un about 2 constituant l'élément mâle du raccord 1 et un élément femelle 3 partiellement emboîtés l'un dans l'autre selon un axe X-X'. L'about 2 est relié à une conduite de fluide C₂, représentée en traits mixtes, tandis que l'élément femelle 3 est relié à une conduite de fluide C₃, également représentée en traits mixtes. L'about 2 définit un passage longitudinal 20 à travers lequel peut s'écouler le fluide. La surface radiale externe de l'about 2 comporte une portion proximale 22 de diamètre relativement grand et une portion distale 24 de diamètre inférieur. Entre les portions proximale 22 et distale 24 se trouvent une gorge annulaire 23 et une collerette annulaire 25 distale.

Une surface est ici qualifiée de « radiale » ou d' « axiale » selon l'orientation d'une normale à cette surface. De plus, une surface radiale est qualifiée d' « interne » si elle est tournée vers l'axe X-X' et d' « externe » si elle est tournée dans le sens opposé. L'adjectif « proximal » désigne un élément d'une pièce proche de la conduite à laquelle est reliée cette pièce, tandis que l'adjectif « distal » désigne un élément qui en est plus éloigné.

L'élément femelle 3 définit un canal 30 de forme complémentaire aux portions proximale 22 et distale 24 de l'about 2, de façon à permettre l'accouplement du raccord 1. L'élément femelle 3 loge en outre une soupape 4 destinée à obturer le canal 30 lorsque le raccord est désaccouplé. La partie du canal 30 destinée à recevoir l'about 2 comporte un alésage distal 32 présentant un diamètre complémentaire à celui de la portion proximale 22, ainsi qu'un alésage proximal 34 présentant un diamètre complémentaire à celui de la portion distale 24.

Dans la position intermédiaire d'accouplement illustrée par la figure 1, l'extrémité distale de l'about 2 accoste une partie distale de la soupape 4 et repousse cette dernière, à l'encontre d'un effort élastique de fermeture exercé par un ressort 44, hors de son siège 36 ménagé dans l'élément femelle 3. Le fluide peut alors s'écouler depuis la conduite C₃ amont vers la conduite C₂ aval et à travers le canal 30 et le passage longitudinal 20. Les termes « amont » et « aval » font référence au sens de l'écoulement du fluide depuis la conduite C₃ vers la conduite C₂. L'autre sens d'écoulement est également envisageable et les termes relatifs « amont » et « aval » seraient inversés.

L'accouplement de l'about 2 dans l'élément femelle 3 est réalisé au moyen d'une translation selon l'axe X-X' qui constitue également un axe de révolution pour l'about 2 et pour le canal 30. Le passage longitudinal 20 s'étend axialement le long de l'axe X-X'. Un joint torique 41 est monté dans une gorge radiale interne de l'élément femelle 3 pour réaliser l'étanchéité sur l'about 2 lorsqu'il est emboîté dans le canal 30.

L'élément femelle 3 comporte des billes de verrouillage réparties autour de l'axe X-X' et dont l'une est visible à la figure 1 avec la référence 50. Comme le montre la comparaison des figures 1 et 2, la bille de verrouillage 50 est mobile radialement, c'est-à-dire selon un axe perpendiculaire à l'axe X-X'. Dans la position déverrouillée illustrée par la figure 1, une partie externe de la bille de verrouillage 50 est susceptible d'occuper un siège d'appui 61 ménagé dans une bague 6 qui forme un élément annulaire de verrouillage, tandis que, dans la position verrouillée, une partie interne de la bille de verrouillage 50 est engagée dans une gorge de verrouillage 23, annulaire et ménagée sur la surface radiale externe de l'about 2.

La partie médiane de la bille de verrouillage 50 est guidée radialement dans une cavité 35 ménagée dans l'élément femelle 3. Dans la position verrouillée illustrée par la figure 2, la bille de verrouillage 50 est apte à immobiliser axialement l'about 2, car la gorge de verrouillage 23 présente un profil partiellement torique de rayon complémentaire au rayon de la bille de verrouillage 50.

La bague 6 de l'élément femelle 3 comporte une goupille 52 constituant un dispositif formant obstacle au déplacement axial de la bague 6 par rapport à la bille de verrouillage 50, lorsque ces dernières sont en position déverrouillée. Dans cette position, l'extrémité interne de la goupille 52 est en contact avec une première surface de butée axiale 31 de l'élément femelle 3, tandis que la partie externe de la goupille 52 se trouve partiellement emboîtée dans un logement 62 prévu dans la bague 6. La goupille 52 et le logement 62 présentent chacun une forme de cylindre droit à base circulaire. La goupille 52 peut s'escamoter dans le logement 62 jusqu'à ne plus former d'obstacle au coulissement de la bague 6, laquelle peut alors se déplacer vers sa position verrouillée.

L'élément femelle 3 comporte en outre un organe de détection de l'about 2 constitué ici par plusieurs billes, dont l'une est visible aux figures 1 et 2 avec la référence 51. La bille de détection 51 est agencée, selon une direction radiale, entre le canal 30 et la goupille 52. Selon une direction axiale, les billes de verrouillage 50 se trouvent entre les billes de détection 51 et l'embouchure 30A par laquelle est introduit un about du type 2. En position déverrouillée, la bille de détection 51 se trouve en regard et au contact de la goupille 52, laquelle repousse la bille de détection 51 vers le canal 30 sous l'effet d'un élément élastique, en l'occurrence un ressort hélicoïdal de compression 53, monté dans le logement 62. Le logement de la bille de détection 51 dans l'élément femelle 3 comprend une butée au déplacement radial de la bille de détection 51 vers l'axe X-X'. Ainsi, en position déverrouillée, la partie interne de la bille de détection 51 est en saillie dans le canal 30, plus précisément dans le volume de l'élément femelle 3 qu'occupe l'about 2 en position verrouillée. De même, les autres billes, non représentées, se trouvent respectivement en regard de chaque goupille 52.

Lors de l'accouplement du raccord 1, l'about 2 est introduit dans le canal 30 et sa portion distale 24 et sa collerette annulaire 25 repoussent sans effort la bille de verrouillage 50 et les billes équivalentes, selon une direction radiale, dans la cavité 35 et en direction du siège d'appui 61. Lorsque la gorge de verrouillage 23 parvient en regard de la bille de verrouillage 50, simultanément, la collerette annulaire 25 écarte radialement la bille de détection 51 hors du canal 30. Plus précisément, la collerette annulaire 25 repousse la bille de détection 51, donc la goupille 52, selon une direction radiale vers l'extérieur et à l'encontre du ressort 53 pour libérer le volume occupé par l'about 2 en position verrouillée.

En d'autres termes, les organes de détection que forment les billes du type 51 réparties autour de l'axe X-X' détectent, à la manière d'un palpeur, le relief que forme la collerette annulaire 25. Chaque bille de détection 51 transmet donc son mouvement radial à une goupille 52 et l'escamote dans le logement 62 jusqu'à une position radiale dans laquelle la goupille 52 ne forme plus obstacle au coulissement de la bague 6 le long de l'élément femelle 3. La bague 6 repousse alors, par l'intermédiaire de l'épaulement formant le siège d'appui 61, la bille de verrouillage 50 dans la gorge de verrouillage 23.

Simultanément, la surface terminale interne 52A de la goupille 52, repoussée par le ressort 53, coulisse sur un méplat de guidage 33 ménagé sur la surface externe de l'élément femelle 3 jusqu'au contact entre une surface annulaire sensiblement axiale de la bague 6 et une deuxième surface de butée axiale 37 de l'élément femelle 3. Le coulissement de la bague 6, après l'escamotage d'une partie substantielle de la goupille 52, est opéré sous l'effet d'un organe élastique, en l'occurrence un ressort hélicoïdal 46, qui rappelle la bague 6 vers la position verrouillée. Il suffit donc d'escamoter la goupille 52 à hauteur du méplat de guidage 33, et non pas intégralement, dans son logement 62. Dans cette position verrouillée, la bague 6 recouvre la bille de verrouillage 50 et la maintient dans la gorge de verrouillage 23, immobilisant ainsi axialement l'about 2 dans l'élément femelle 3. Le mouvement relatif entre la bille de verrouillage 50 et la bague 6, entre la configuration déverrouillée et la configuration verrouillée, est donc radial et axial.

Pour désaccoupler l'about 2 hors de l'élément femelle 3, un opérateur doit ramener et maintenir la bague 6 dans sa position déverrouillée, c'est-à-dire la déplacer vers la conduite C₃, ce qui permet de simultanément libérer la bille de verrouillage 50 hors de la gorge de verrouillage 23 et de replacer la goupille 52 en regard de la bille de détection 51. L'opérateur retire alors l'about 2 du canal 30, si bien que la collerette annulaire 25 quitte le contact des billes de détection 51. Chaque bille de détection 51 est alors repoussée radialement vers le canal 30 par la goupille 52 correspondante sous l'action du ressort 53. La goupille 52 forme alors à nouveau obstacle au coulissement de la bague 6 vers la position de verrouillage. L'about 2 est ensuite complètement retiré et chaque composant mobile de l'élément femelle 3 se trouve de nouveau en position déverrouillée. L'élément femelle 3 est disponible pour une nouvelle connexion automatique.

Les billes de détection 51 sont ici réparties régulièrement à la périphérie du canal 30. Les billes de détection 51 sont mobiles essentiellement selon une direction radiale par rapport à l'élément femelle 3. Les billes de détection 51 coopèrent alors ensemble pour détecter de façon uniforme le relief de l'about 2, car il est nécessaire d'escamoter radialement, par un déplacement radial et centrifuge approprié de chaque bille de détection 51, chaque goupille 52 formant obstacle dans un logement correspondant. Dans une telle construction, les billes de détection 51 sont repoussées radialement vers l'axe X-X' par autant de ressorts, à l'instar de la goupille 52 et du ressort 53.

Ainsi, lorsque plusieurs organes de détection de l'about 2 sont répartis autour de l'axe X-X', la fiabilité du raccord 1 est augmentée, car il devient nécessaire d'agir simultanément sur tous les organes de détection pour libérer la bague 6. En particulier, au moins deux ensembles billes-goupilles alors diamétralement opposés dans la bague 6 sont nécessaires pour s'assurer de l'adéquation du diamètre extérieur de l'about 2 avec le diamètre du canal 30. Plus il y a d'organes de détection, de préférence régulièrement répartis autour de l'axe X-X', plus grande est la fiabilité du raccord et plus faible est le risque d'accouplement erroné ou défaillant. En variante, les goupilles 52 peuvent ne pas être à base circulaire.

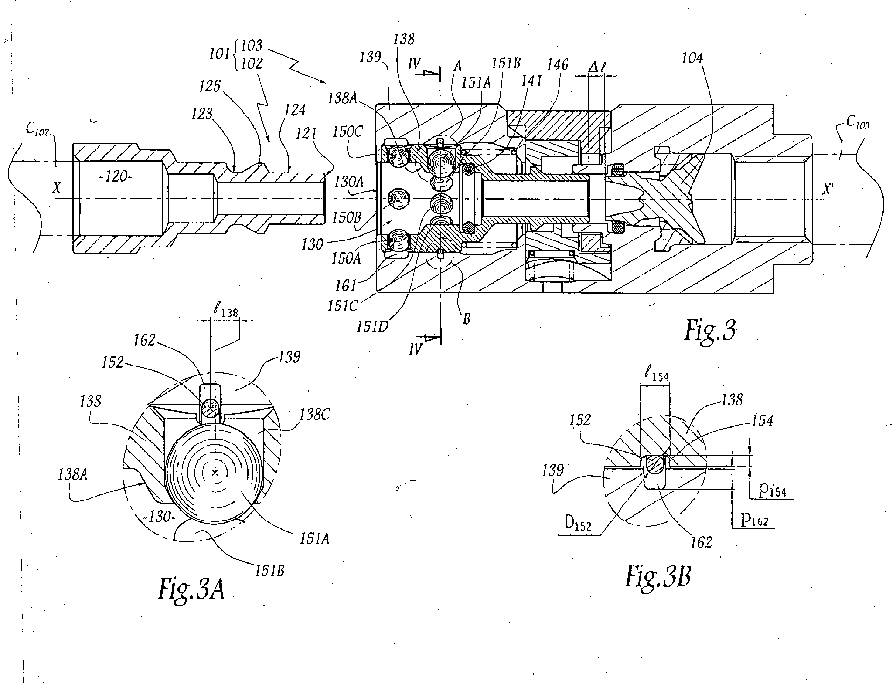

Les figures 3 à 7 illustrent un deuxième mode de réalisation de l'invention dans laquelle les éléments de structure ou de fonction correspondante portent les mêmes références augmentées de 100. Les différences proviennent, d'une part, de la construction de l'élément femelle et de l'élément annulaire de verrouillage et, d'autre part, de la structure du dispositif formant obstacle au verrouillage.

Le raccord 101 comporte un about 102 relié à une conduite C₁₀₂, représentée en traits mixtes, et destiné à être emboîté dans un canal 130 de l'élément femelle 103, lequel est relié à une conduite C₁₀₃ représentée en traits mixtes.

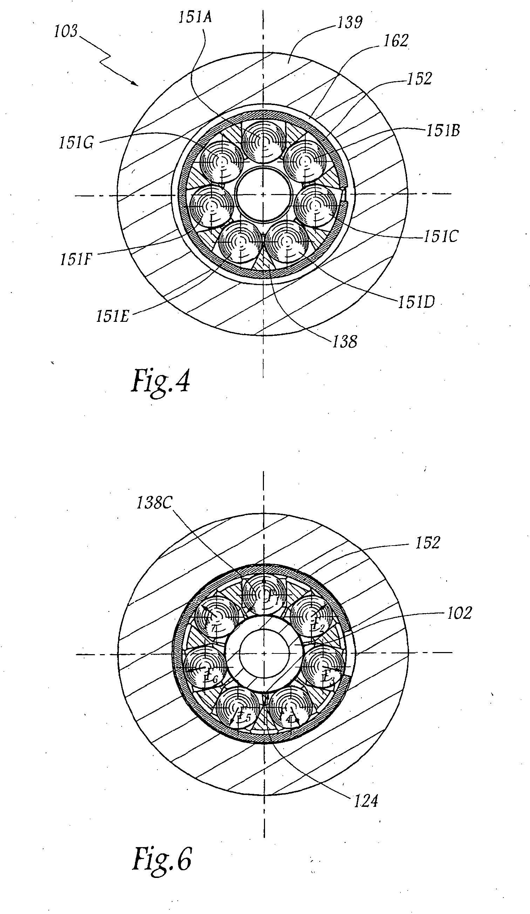

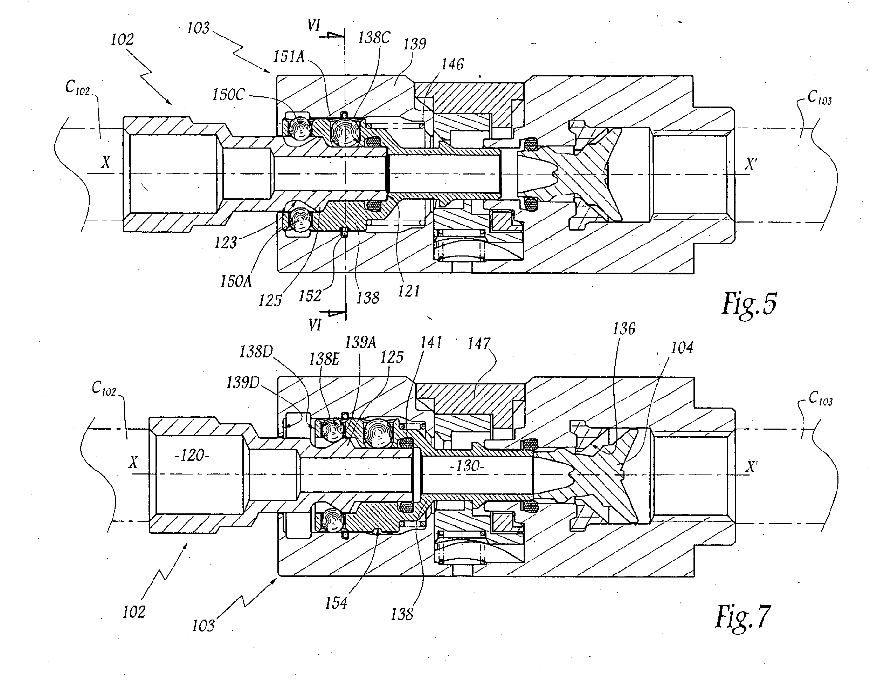

Plus précisément, l'élément femelle 103 comporte un alésage dans lequel est monté un adaptateur 138 formant un composant intermédiaire coulissant le long de l'axe X-X' d'emboîtement des parties 102 et 103. L'adaptateur 138 définit le canal 130 de forme complémentaire à la surface radiale externe de l'about 102. L'adaptateur 138 remplit les fonctions de réception de la partie médiane des billes de verrouillage 150A-150C et de guidage radial des billes de détection 151A-151G dévolues au corps de l'élément femelle 3 dans le premier mode de réalisation. Les figures 4 et 6 présentent toutes les billes de détection 151A-151G, tandis que la figure 3 en montre quatre 151A-151D et que les figures 5 et 7 n'en montrent qu'une 151A. De plus, l'élément femelle 103 possède un corps 139 qui forme un élément annulaire de verrouillage et qui remplit les fonctions dévolues à la bague 6 dans le premier mode de réalisation.

L'élément femelle 103 comporte quatre billes de verrouillage réparties régulièrement autour de l'axe X-X' et dont trois sont visibles à la figure 3 avec les références 150A, 150B et 150C. Selon une direction axiale, les billes de verrouillage 150 se trouvent entre les billes de détection 151 et l'embouchure 130A par laquelle est introduit un about du type 102. Lors de son introduction dans le canal 130, l'about 102 peut repousser sans effort important les billes de verrouillage 150A-150C dans des sièges d'appui 161 respectifs constitués ici d'une gorge annulaire commune ménagée dans le corps 139. Puis, l'extrémité distale de l'about 102 accoste les billes de détection 151A-151G, qui dépassent dans le canal 130, c'est-à-dire dans le volume de l'adaptateur 138 qu'occupe l'about 102 en position verrouillée, vers lequel elles sont poussées élastiquement. Les sept billes de détection 151A-151G sont régulièrement réparties autour de l'axe X-X'.

Le dispositif formant obstacle au déplacement axial des billes de verrouillage 150A-150C par rapport au corps 139 constituant l'élément annulaire de verrouillage est ici constitué d'un jonc d'arrêt 152 globalement annulaire. Le dispositif forme obstacle sur une majeure partie de la circonférence du corps 139 et il est donc constitué d'une seule pièce à la différence des goupilles 52 qui forment de multiples obstacles locaux dans le raccord.

Dans la position déverrouillée, le jonc d'arrêt 152 est en prise d'une part avec l'adaptateur 138 et d'autre part avec le corps 139. Le jonc d'arrêt 152 est en effet placé dans une gorge annulaire 154 ménagée sur la surface radiale externe de l'adaptateur 138. Le jonc d'arrêt 152 est aussi partiellement disposé dans un logement 162 constitué d'une gorge annulaire ménagée dans l'alésage du corps 139. Le jonc d'arrêt 152 bloque ainsi le déplacement axial relatif entre le corps 139 et l'adaptateur 138 et maintient les billes de verrouillage 150 face aux sièges d'appui 161.

Comme dans le raccord 1, les billes de détection 151A-151 G, disposées radialement entre le canal 130 et le jonc d'arrêt 152, sont aptes à escamoter radialement vers l'extérieur le jonc d'arrêt 152 dans le logement 162 lorsqu'elles sont écartées radialement par la surface radiale externe et distale 124 de l'about 102 vers le corps 139 hors du canal 130. Les efforts radiaux qu'exercent les billes de détection 151, déplacées chacune radialement, sur le jonc d'arrêt 152 sont symbolisés à la figure 6 par les flèches F₁ à F₇. Le jonc d'arrêt 152 est composé d'un fil métallique à section globalement circulaire coupé et conformé en un anneau élastique de forme sensiblement torique. Lors de son escamotage, l'anneau formant le jonc d'arrêt 152 s'élargit, au niveau de son diamètre intérieur de tore et sous les efforts radiaux exercés par les billes de détection 151 réparties régulièrement autour de l'axe X-X', comme le montre la comparaison des figures 4 et 6. Le coulissement de l'adaptateur 138 dans le corps 139 n'est alors plus bloqué par le jonc d'arrêt 152.

Ensuite, lorsque la gorge de verrouillage 123 de l'about 102 parvient en regard des billes de verrouillage 150, l'about 102 parvient en butée contre l'adaptateur 138 et le repousse à l'encontre du ressort hélicoïdal 146 sur une course Δℓ jusqu'au contact entre l'adaptateur 138 et une soupape 104 de l'élément femelle 103. Pour cela, l'adaptateur 138 présente une forme complémentaire à celle de l'about 102 et possède en particulier un épaulement 138A apte à coopérer avec la face axiale distale d'une collerette annulaire 125 radiale externe de l'about 102.

L'adaptateur 138 se déplace axialement vers la conduite C₁₀₃ en entraînant les billes de verrouillage 150 et de détection 151. Les billes de verrouillage 150 ont alors, entre la position déverrouillée et la position verrouillée, un mouvement radial et axial par rapport au corps 139. Les billes de détection 151 quittent le contact avec le jonc d'arrêt 152 qui reste maintenu escamoté dans le logement 162 par la surface radiale externe de l'adaptateur 138.

Dans cette position verrouillée, les billes de verrouillage 150A-150C sont maintenues dans une gorge de verrouillage 123 de l'about 102 assurant ainsi son immobilisation axiale relativement à l'adaptateur 138. Comme dans le raccord 1, la gorge de verrouillage 123 se trouve derrière la collerette annulaire 125 sur la surface radiale externe de l'about 102, c'est-à-dire à l'opposé d'une extrémité annulaire axiale et distale 121 de l'about 102 par rapport à cette collerette.

L'adaptateur 138 repousse la soupape 104 qui quitte son siège 136 et autorise le passage du fluide depuis la conduite C₁₀₃ à travers le canal 130 et vers la conduite C₁₀₂ à travers le passage longitudinal 120 défini par l'about 102. Durant sa course, la partie proximale de l'adaptateur 138 vient enclencher un mécanisme d'arrêt analogue à celui décrit par FR-A-2 882 803 et apte à immobiliser axialement l'adaptateur 138, dans l'élément femelle 103, lequel peut être ultérieurement libéré au moyen d'une pression sur un bouton 147.

Après l'accouplement et le verrouillage, le fluide s'écoule dans le canal 130 et repousse axialement l'about 102 vers la conduite C₁₀₂. Le raccord est alors dans la configuration de la figure 7. Un joint 141 assure l'étanchéité entre l'adaptateur 138 et l'about 102. Lors du recul de l'about 102, la surface proximale de la collerette annulaire 125 vient buter contre les billes de verrouillage 150. Ces dernières sont alors coincées entre la collerette annulaire 125, la surface radiale interne 139A de l'alésage du corps 139 et une surface annulaire axiale 138E de l'adaptateur 138 et elles immobilisent l'about 102 dans l'adaptateur 138 dans cette position de fonctionnement.

La gorge formant le logement 162 présente une longueur axiale et une profondeur p₁₆₂ respectivement supérieures au diamètre D₁₅₂ du fil du jonc d'arrêt 152, afin de loger intégralement ce dernier dans la configuration des figures 7 et 3B. Pour escamoter intégralement le jonc d'arrêt 152 dans le logement 162, il est nécessaire de déformer uniformément le jonc d'arrêt 152 sur toute sa circonférence. C'est pourquoi on emploie plusieurs billes de détection 151 réparties, de préférence régulièrement, autour de l'axe X-X' qui sont écartées radialement pour escamoter ensemble le jonc d'arrêt 152. En d'autres termes, l'escamotage du jonc d'arrêt 152 n'est obtenu qu'après un écartement ou un déplacement radial approprié de chaque bille de détection 151.

De plus, le jonc d'arrêt 152 doit être construit de façon à rester suffisamment rigide entre deux points de déformation par les billes de détection 151. Le jonc d'arrêt 152 est constitué d'un anneau ouvert en fil métallique déformé élastiquement par l'action radiale vers l'extérieur des billes de détection 151 et qui, sans action des billes, se rétreint spontanément vers sa position de repos, c'est-à-dire en direction de l'axe X-X', si bien qu'il peut exercer un effort élastique tendant à ramener les billes de détection 151 vers le canal 130. Le jonc d'arrêt 152 combine donc intrinsèquement les fonctions d'obstacle et de rappel élastique des billes de détection 151 en position déverrouillée.

Pour assurer le contact du jonc d'arrêt 152 au fond de la gorge annulaire 154, cette dernière présente une longueur axiale I₁₅₄ légèrement supérieure au diamètre D₁₅₂ de la section circulaire du fil du jonc d'arrêt 152 et un diamètre de fond de gorge annulaire 154 légèrement supérieur au diamètre intérieur du jonc d'arrêt 152, lorsque celui-ci est en configuration de repos, non assemblé avec le raccord. Pour permettre le retour du jonc d'arrêt 152 au fond de la gorge annulaire 154 lors du déverrouillage du raccord 101, chaque bille de détection 151 présente un débattement radial approprié vers le canal 130. Le maintien des billes de détection 151 en position radiale dans l'adaptateur 138 est assuré par le fond conique rétréci de chaque cavité 138C logeant une bille de détection 151.

Par ailleurs, la profondeur p₁₅₄ de la gorge annulaire 154 est inférieure au diamètre D₁₅₂ pour assurer un contact du jonc d'arrêt 152 simultanément avec l'adaptateur 138 et avec le logement 162. De plus, la profondeur p₁₅₄ de la gorge annulaire 154 peut être supérieure au rayon D₁₅₂/2, de telle sorte que le jonc d'arrêt 152 est plus en prise avec l'adaptateur 138 qu'avec le corps 139, c'est-à-dire que, comme on le voit dans le plan de la figure 3A, le centre de la section circulaire du fil constituant le jonc d'arrêt 152 est situé dans la gorge annulaire 154. Ainsi, un coulissement de l'adaptateur 138 sans écartement radial des billes de détection 151 dû à un objet autre qu'un about approprié génère un effort axial du corps 139 appliqué sur la partie du fil du jonc d'arrêt 152 située radialement au-delà du centre du fil du jonc d'arrêt 152 et du côté du logement 162. Un tel effort tend plutôt à ramener le jonc d'arrêt 152 dans la gorge annulaire 154 et il ne permet donc pas son escamotage dans le logement 162.

L'axe central de la gorge annulaire 154 peut être positionné avec un faible décalage ℓ₁₃₈ vers l'extrémité distale de l'adaptateur 138 par rapport au centre des cavités 138C recevant des billes de détection 151. Du fait de ce décalage ℓ₁₃₈, typiquement de l'ordre de 0,15 mm pour un jonc de diamètre de fil de l'ordre de 1 mm, l'axe des billes de détection 151, lorsqu'elles sont repoussées radialement vers le corps 139, se trouve légèrement plus proche de la conduite C₁₀₃ que le centre de la section circulaire du fil constituant le jonc d'arrêt 152, lequel ne peut alors pas gêner leur déplacement vers la conduite C₁₀₃.

Pour désaccoupler le raccord 101, il faut d'abord débloquer le mécanisme d'arrêt de l'adaptateur 138 en actionnant le bouton 147 comme cela est décrit dans FR-A-2 882 803. Le ressort 146 comprimé peut alors repousser l'about 102 vers l'embouchure 130A.

L'about 102 et l'adaptateur 138, solidarisés par les billes de verrouillage 150, reculent ensemble jusqu'au contact d'une surface terminale distale 138D de l'adaptateur 138 avec une surface de butée distale 139D du corps 139. Les billes de verrouillage 150A-150C se trouvent alors face aux sièges d'appui 161 et sont libres de se désengager radialement de la gorge de verrouillage 123 désolidarisant ainsi l'about 102 et l'adaptateur 138. Les billes de détection 151 reprennent leurs places au contact du jonc d'arrêt 152.

L'about 102 retiré par l'opérateur peut poursuivre son mouvement de recul jusqu'à libérer à leur tour les billes de détection 151, lesquelles sont ramenées vers le canal 130 contre le fond conique de chaque cavité 138C par l'effort élastique exercé radialement, de façon centripète, par le jonc d'arrêt 152 qui reprend sa position d'obstacle au fond de la gorge annulaire 154. Le raccord 101 est ainsi désaccouplé et l'élément femelle 103 est disponible pour une nouvelle connexion automatique avec un about du type 102.

L'élément femelle 103 présente une tolérance aux variations de diamètre d'about qui est supérieure à celle des raccords de l'art antérieur avec ruban, en raison de la forme en fil à section circulaire du jonc d'arrêt. Cette tolérance est indispensable au fonctionnement du raccord, car les organes de détection sont différents des billes de verrouillage. Si la surface radiale externe et distale 124 de l'about 102 détectée par les billes de détection 151 est réalisée en côte faible, la position atteinte par les billes de détection 151 et par le jonc d'arrêt 152 est proche mais en-deçà de la position où le jonc d'arrêt 152 se trouve escamoté. Cependant, tout mouvement axial relatif entre les pièces en prise avec le jonc d'arrêt 152, sous l'effort d'accouplement, exercé par exemple par l'about 102 sur l'adaptateur 138, achève l'escamotage du jonc d'arrêt 152 en exerçant un effort radial sur le jonc d'arrêt 152 qui le repousse dans le logement 162.

De plus, contrairement aux éléments femelles de l'art antérieur, la construction de l'élément femelle objet de l'invention demeure compacte. Dans la direction radiale, un volume relativement faible suffit pour implanter le dispositif formant obstacle et ses moyens élastiques de rappel. Dans la direction axiale, l'anneau élastique nécessite un encombrement faible par rapport à un dispositif formant obstacle des raccords de l'art antérieur.

Un élément femelle conforme à la présente invention permet donc d'assurer une plus grande fiabilité de la connexion, car son ou ses organe(s) de détection opère(nt) une détection plus sûre de l'about.

En effet, avec un raccord de l'art antérieur où les billes de verrouillage remplissent la fonction de détection de l'about, si on escamote l'obstacle, tel qu'un ruban annulaire élastique, et qu'on retire l'about hors de l'élément femelle avant l'accouplement, la bague de verrouillage peut être repoussée axialement par les ressorts de rappel, ce qui empêche une nouvelle connexion automatique du raccord et nécessite une intervention manuelle pour le repositionner.

Contrairement à la technique connue avec bague de sécurité axiale, c'est la surface radiale externe de l'about et non son extrémité distale qui est détectée. En particulier, quand l'élément femelle comporte plusieurs organes de détection régulièrement répartis autour de son axe, l'about doit posséder une géométrie cylindrique extérieure appropriée de façon à dégager radialement en même temps tous les organes de détection pour escamoter le dispositif formant obstacle. L'élément femelle peut également comporter plusieurs organes de détection répartis de manière irrégulière autour de son axe. De même, les billes de verrouillage peuvent être irrégulièrement réparties autour de l'axe X-X'.

En outre, les organes de détection sont situés en amont des billes de verrouillage et donc dans une région parcourue par l'about après son passage entre ces billes. Cela garantit que l'about est suffisamment emboîté et correctement orienté dans l'élément femelle avant que ne s'opère le verrouillage.

Par ailleurs, la fiabilité du raccord objet de l'invention est également améliorée par l'escamotage radial du dispositif formant obstacle au verrouillage à l'encontre d'efforts élastiques radiaux, évitant ainsi les interférences avec les ressorts de rappel agissant dans la direction axiale.

D'autres modes de réalisation sont possibles dans le cadre de cette invention. On peut également prévoir des organes de détection composés de plusieurs pièces pour escamoter le dispositif formant obstacle. Les organes de détection peuvent également prendre d'autres géométries que celles de billes.

Par ailleurs, la mise en oeuvre d'un obstacle par jonc est possible dans l'élément femelle du premier mode de réalisation et l'obstacle par goupilles est adaptable dans l'élément femelle du second mode de réalisation de l'invention.

## Revendications

1. Elément femelle (103) de raccord (101) présentant un canal (130) s'étendant axialement (X-X') et destiné à recevoir un about mâle (102), l'élément femelle comportant un élément annulaire (139) de verrouillage de l'about (102) formé par un premier corps solidaire de l'élément femelle (103) et au moins une bille de verrouillage (150A-150C) de l'about (102) mobile axialement (X-X') par rapport à l'élément annulaire (139) et radicalement entre une position déverrouillée (fig. 3 à 6) où elle est susceptible d'occuper un siège d'appui (161) ménagé dans l'élément annulaire (139), et une position verrouillée (fig, 7) où elle est guidée radialement dans un second corps (138) de l'élément femelle (103) et où elle est apte à bloquer axialement (X-X') l'about (102) dans le corps (138), l'élément femelle (103) comportant en outre :
- au moins un dispositif (152) formant obstacle au déplacement axial (X-X') de l'elément annulaire (139) par rapport à la bille de verrouillage (150A-150C) en position déverrouillée, ledit dispositif (152) étant escamotable radialement, et
- au moins un élément clastique (152) de rappel dudit dispositif (152) en position déverrrouillée et
- au moins un organe (151A-151G) de détection de l'about (102) agencé radialement entre le canal (130) et ledit dispositif (152), l'organe de détection (151A-151G) étant apte, en position déverrouillée, à être écarté radialement par l'about (102) de façon à escamoter le dispositif (152) :
ledit dispositif et l'élément élastique étant constitués d'un jonc d'arrêt (152) en forme d'anneau élastique,
ledit second corps (138) étant monté coulissant axialement (X-X') dans le premier corps (139), le second corps (138) définissant le canal (130) et présentant des cavités (138C) aptes à recevoir la bille de verrouillage (150A-154C) et l'organe de détection (151A-151G),
l'élément femelle (103) étant **caractérisé en ce que** le jonc d'arrét (152) est composé d'un fil à section globalement circulaire (D₁₅₂) de forme sensiblement torique,
**en ce que en ce que** l'élément femelle (103) comporte en outre un mécanisme d'arrêt (147) apte à immobiliser axialement le second corps (138) par rapport au premier corps (139) et
**en ce que** l'élément femelle (103) comprend un organe élastique (146) de rappel du second corps (138) en position déverrouillée.

2. Elément femelle (103) de raccord (101) selon la revendication 1, **caractérisé en ce qu'**il comprend plusieurs organes de détection (151A-151G) répartis à le périphérie du canal (130) et aptes à être écartés radialement par l'about (102) de façon à escamoter ensemble le dispositif (152).

3. Elément femelle (103) de raccord (101) selon l'une des revendications précédentes, **caractérisé en ce que** la bille de verrouillage (150A-150C) se trouve entre l'organe de détection (151A-151G) et une embouchure (130A) du canal (130) destinée à recevoir un about mâle (102).

4. Elément femelle (103) de raccord (101) selon l'une des revendications précédentes, **caractérisé en ce que** le dispositif (152) est escamotable selon la direction centrifuge dans au moins un logement (162) ménagé dans le premier corps (139).

5. Elément femelle (103) de raccord (101) selon l'une des revendications 2 à 4, **caractérisé en ce que** les organes de détection (151A-151G) sont mobiles radialement vers l'extérieur par rapport à l'élément femelle (103) de façon à escamoter le dispositif (152).

6. Elément femelle (103) de raccord (101) selon l'une des revendications précédentes, **caractérisé en ce que** l'organe de détection est une bille (151A-151G).

7. Elément femelle (103) de raccord (101) selon l'une des revendications précédentes, **caractérisé en ce que** le jonc d'arrêt (152) est reçu dans une gorge annulaire (154) de l'élément femelle (103) en position déverrouillée, la dimension axiale (I₁₅₄) de la gorge annulaire (154) étant supérieure au diamètre (D₁₅₂) du fil du jonc d'arrêt (152) et la profondeur (p₁₅₄) de la gorge annulaire (154) étant inférieure au diamètre (D₁₅₂) du fil du jonc d'arrêt (152), tandis qu'en position verrouillée (fig. 7), le jonc d'arrêt (152) est escamoté hors de la gorge (154) annulaire.

8. Elément femelle (103) de raccord (101) selon la revendication 7, **caractérisé en ce que** la profondeur (p₁₅₄) de la gorge annulaire (154) est supérieure à la moitié du diamètre (D₁₅₂) du fil du jonc d'arrêt (152).

9. Elément femelle (103) de raccord (101) selon l'une des revendications 7 ou 8, **caractérisé en ce qu'**il présente au moins une cavité (138C) destinée à recevoir un organe de détection (151A-151G) et **en ce que** la gorge annulaire (154) est décalée (I₁₃₈) axialement (X-X') vers l'embouchure (130A) du canal (130) par rapport au centre de la ou de chaque cavité (138C).

10. Raccord rapide (101) pour la jonction de deux conduites (C₁₀₂-C₁₀₃) comprenant un élément femelle et un about (102), **caractérisé en ce que** l'élément femelle (103) est selon l'une des revendications précédentes et **en ce que** l'about (102) préserte une gorge de verrouillage (123) apte à recevoir la ou chaque bille de verrouillage (150A-150C), ainsi qu'une partie externe (125; 124) apte à écarter radialement l'organe de détection (151A-151G) de façon à escamoter le dispositif (152) formant obstacle.

## Patentansprüche

1. Aufnahmeelement (103) einer Kupplung (101), das einen sich axial (X-X') erstreckenden Kanal (130) aufweist und das dazu dient, ein Einsteckkopfelement (102) aufzunehmen, wobei das Aufnahmeelement ein Ringelement (139) zur Verriegelung des Kopfelementes (102) aufweist, das durch einen ersten, mit dem Aufnahmeelement (103) verbundenen Körper und mindestens einer Verriegelungskugel (150A-150C) des Kopfelementes (102) gebildet wird, die axial (X-X') in Bezug auf den Ringkörper (139) und radial zwischen einer entriegelten (Fign. 3 bis 6) Stellung, in der sie geeignet ist, einen in dem Ringelement (139) eingearbeiteten Abstützsitz (161) zu besetzen, und einer verrie-gelten Stellung (Fig. 7), in der sie radial in einem zweiten Körper (138) des Aufnahmeelementes (103) geführt ist und in der sie in der Lage ist, axial (X-X') das Kopfelement (102) in dem Körper (138) zu blockieren, beweglich ist, wobei das Aufnahmeelement (103) außerdem umfasst:
- mindestens eine Vorrichtung (152), die ein Hindernis für die axiale (X-X') Bewegung des Ringelements (139) in Bezug auf die Verriegelungskugel (150A-150C) in der entriegelten Stellung bildet, wobei die Vorrichtung (152) radial versenkbar ist, und
- mindestens ein elastisches Rückstellelement (152) der Vorrichtung (152) in entriegelter Stellung und
- mindestens ein Element (151A-151G) zur Erfassung des Kopfelementes (102), das radial zwischen dem Kanal (130) und der Vorrichtung (152) angeordnet ist, wobei das Erfassungselement in der Lage ist, in der entriegelten Stellung radial durch das Kopfelement (102) entfernt zu werden, um die Vorrichtung (152) zu versenken;
wobei die Vorrichtung und das elastische Element von einem Sicherungsring (152) in Form eines elastischen Ringes gebildet werden,
wobei der zweite Körper (138) axial (X-X') gleitend in dem ersten Körper (139) montiert Ist und der zweite Körper (138) den Kanal (130) begrenzt und Hohlräume (138C) aufweist, die geeignet sind, die Verriegelungskugel (150A-150C) und das Erfassungselement (151A-151G) aufzunehmen,
wobei das Aufnahmeelement **dadurch gekennzeichnet ist, dass** der Sicherungsring (152) durch einen Draht mit im Wesentlichen kreisförmigem Querschnitt in im Wesentlichen torischer Form ausgebildet ist,
dass das Aufnahmeelement (103) außerdem einen Anschlagmechanismus (147) aufweist, der geeignet ist, axial den zweiten Körper (138) in Bezug auf den ersten Körper (139) zum Stillstand zu bringen, und
dass das Aufnahmeelement (103) ein zweites elastisches Element (146) zur Rückstellung des zweiten Körpers (138) in die entriegelte Stellung aufweist.

2. Aufnahmeelement (103) einer Kupplung (101) nach Anspruch 1,
**dadurch gekennzeichnet, dass** es mehrere Erfassungselemente (151A-151G) umfasst, die über den Umfang des Kanals (130) verteilt sind und geeignet sind, radial durch das Kopfelement (102) entfernt zu werden, um zusammen die Vorrichtung (152) zu versenken.

3. Aufnahmeelement (103) einer Kupplung (101) nach einem der vorhergehenden Ansprüche, **dadurch gekennzeichnet, dass** die Verriegelungskugel (150A-150C) sich zwischen dem Erfassungselement (151A-151G) und einer Mündung (130A) des Kanals (130) befindet, die vorgesehen ist, ein Einsteckkopfelement (102) aufzunehmen.

4. Aufnahmeelement (103) einer Schnellkupplung (101) nach einem der vorhergehenden Ansprüche, **dadurch gekennzeichnet, dass** die Vorrichtung (152) gemäß der Zentrifugalrichtung in mindestens einem Aufnahmeraum (162) versenkbar ist, der in dem ersten Körper (139) eingearbeitet ist.

5. Aufnahmeelement (103) einer Kupplung (101) nach einem der Ansprüche 2 bis 4, **dadurch gekennzeichnet, dass** die Erfassungselemente (151A-151G) radial nach außen in Bezug auf das Aufnahmeelement (103) beweglich sind, um die Vorrichtung (152) zu versenken.

6. Aufnahmeelement (103) einer Kupplung (101) nach einem der vorhergehenden Ansprüche, **dadurch gekennzeichnet, dass** das Erfassungselement eine Kugel (151A-151G) ist.

7. Aufnahmeelement (103) einer Kupplung (101) nach einem der vorhergehenden Ansprüche, **dadurch gekennzeichnet, dass** der Sicherungsring (152) in einer Ringnut (154) des Aufnahmeelementes (103) in der entriegelten Stellung aufgenommen ist, wobei die axiale Abmessung (I₁₅₄) der Ringnut (154) größer als der Durchmesser (D₁₅₂) des Drahtes des Sicherungsrings (152) ist und die Tiefe (p₁₅₄) der Ringnut (154) geringer als der Durchmesser (D₁₅₂) des Drahtes des Sicherungsrings (152) ist, während in der verriegelten Stellung (Fig. 7) der Sicherungsring (152) außerhalb der Ringnut (154) versenkbar ist.

8. Aufnahmeelement (103) einer Kupplung (101) nach Anspruch 7,
**dadurch gekennzeichnet, dass** die Tiefe (p₁₅₄) der Ringnut (154) größer ist als die Hälfte des Durchmessers (D₁₅₂) des Drahtes des Sicherungsrings (152).

9. Aufnahmeelement (103) einer Kupplung (101) nach einem der Ansprüche 7 oder 8, **dadurch gekennzeichnet, dass** es mindestens einen Hohlraum (138C) aufweist, der dazu dient, ein Erfassungselement (151A-151G) aufzunehmen, und dass die Ringnut (154) axial (X-X') zur Mündung (130A) des Kanals (130) in Bezug auf die Mitte des oder jedes Hohlraums (138C) versetzt ist.

10. Schnellkupplung (101) für die Verbindung von zwei Leitungen (C₁₀₂-C₁₀₃), die ein Aufnahmeelement und ein Kopfelement (102) aufweist, **dadurch gekennzeichnet, dass** das Aufnahmeelement (103) gemäß einem der vorhergehenden Ansprüche ausgebildet ist und dass das Knopfelement (102) eine Verriegelungsnut (123), die geeignet ist, die oder jede Verriegelungskugel (150A-105C) aufzunehmen, sowie einen Außenbereich (125; 124) aufweist, der geeignet ist, radial das Erfassungselement (151A-151G) zu entfernen, um die ein Hindernis bildende Vorrichtung (152) zu versenken.

## Claims

1. Female element (103) for a connector (101), having a channel (130) extending axially (X-X') and intended to accommodate a male end piece (102), the female element having an annular element (139) for locking the end piece (102) formed by the first body integral with the female element (103) and at least one locking ball (150A-150C) for locking the end piece (102) that can move axially (X-X') relative to the annular element (139) and radially between an unlocked position (Figures 3 to 6), in which said ball is capable of occupying a bearing seat (161) provided in the annular element (139), and a locked position (Figure 7), in which it is guided radially in a second body (138) of the female element (103) and in which it is capable of axially blocking (X-X') the end piece (102) in the body (138), the female element (103) further including:
- at least one device (152) forming an obstacle to the axial displacement (X-X') of the annular element (139) relative to the locking ball (150A-150C) in the unlocked position, said device (152) being radially retractable;
- at least one resilient element (152) for returning said device (152) to the unlocked position ; and
- at least one detection member (151A-151G) for detecting the end piece (102), placed radially between the channel (130) and said device (152), the detection member (151A-151G) being capable, in the unlocked position, of being moved away radially by the end piece (102) so as to retract the device (152),
said device and the resilient element consisting of a stop clip (152) in the form of a resilient ring,
said second body (138) being mounted to slide axially (X-X') in the first body (139), the second body (138) defining the channel (130) and having cavities (138C) able to receive the locking ball (150A-150C) and the detection member (151A-151G),
the female element (103) being **characterized in that** the stop clip (152) consists of a wire of generally circular cross section (D₁₅₂) generally toroidally-shaped,
**in that** the female element (103) also includes a stop mechanism (147) able to axially immobilize the second body (138) relative to the first body (139) and
**in that** the female element (103) includes an elastic member (146) for returning the second body (138) in the unlocked position.

2. Female element (103) for a connector (101) according to claim 1, **characterized in that** it comprises several detection members (151A-151G) distributed on the periphery of the channel (130) and capable of being moved radially away by the end piece (102) so as together to retract the device (152).

3. Female element (103) for a connector (101) according to either of the preceding claims, **characterized in that** the locking ball (150A-150C) lies between the detection member (151A-151G) and a mouth (130A) of the channel (130) intended to accommodate a male end piece (102).

4. Female element (103) for a connector (101) according to one of the preceding claims, **characterized in that** the device (152) can be retracted along the centrifugal direction into at least one housing (162) provided in the first body (139).

5. Female element (103) for a connector (101) according to one of claims 2 to 4, **characterized in that** the detection members (151A-151G) can move radially outwards relative to the female element (103) so as to retract the device (152).

6. Female element (103) for a connector (101) according to one of the preceding claims, **characterized in that** the detection member is a ball (151A-151G).

7. Female element (103) for a connector (101) according to one of the preceding claims, **characterized in that** the stop clip (152) is accommodated in an annular groove (154) of the female element (103) in the unlocked position, the axial dimension (I₁₅₄) of the annular groove (154) being greater than the diameter (D₁₅₂) of the wire of the stop clip (152) and the depth (p₁₅₄) of the annular groove (154) being less than the diameter (D₁₅₂) of the wire of the stop clip (152), whereas in the locked position (Figure 7), the stop clip (152) is retracted away from the annular groove (154).

8. Female element (103) for a connector (101) according to claim 7, **characterized in that** the depth (p₁₅₄) of the annular groove (154) is greater than one half of the diameter (D₁₅₂) of the wire of the stop clip (152).

9. Female element (103) for a connector (101) according to either of claims 7 and 8, **characterized in that** it has at least one cavity (138C) intended to accommodate a detection member (151A-151G) and **in that** the annular groove (154) is offset (I₁₃₈) axially (X-X') towards the mouth (130A) of the channel (130) relative to the centre of the or each cavity (138C).

10. Quick-fit connector (101) for joining two pipes (C₁₀₂-C₁₀₃), which comprises a female element and an end piece (102), **characterized in that** the female element (103) is according to one of the preceding claims and **in that** the end piece (102) has a locking groove (123) capable of accommodating the or each locking ball (150A-150C), and an external part (125; 124) capable of moving the detection member (151A-151G) radially away so as to retract the obstacle-forming device (152).
